Europäisches Patentamt

European Patent Office

Office européen des brevets

(11) Veröffentlichungsnummer: **0 229 008**
A2

# (12) EUROPÄISCHE PATENTANMELDUNG

(21) Anmeldenummer: 86890258.6

(22) Anmeldetag: 17.09.86

(51) Int. Cl.⁴: **B 44 C 1/24**
B 41 M 1/24

(30) Priorität: 16.12.85 AT 3620/85

(43) Veröffentlichungstag der Anmeldung:
15.07.87 Patentblatt 87/29

(84) Benannte Vertragsstaaten:
AT BE CH DE FR GB IT LI LU NL SE

(71) Anmelder: **Rakoczy, Jozef**
**Halleggerstrasse 125**
**A-9061 Wölfnitz-Klagenfurt Kärnten (AT)**

(72) Erfinder: **Rakoczy, Jozef**
**Halleggerstrasse 125**
**A-9061 Wölfnitz-Klagenfurt Kärnten (AT)**

(74) Vertreter: **Beer, Otto, Dipl.-Ing. et al**
**Lindengasse 8**
**A-1071 Wien (AT)**

(54) **Verfahren zum Herstellen von Reliefbildern.**

(57) Zur Herstellung von Reliefbildern wird eine Schaumstoffplatte bedruckt und dann mit einem auf eine Temperatur
zwischen 100 und 130° C erhitzten Prägestempel etwa 5 bis 10
sec lang mit einem Druck von wenigstens 0,5 kg/cm² geprägt.

EP 0 229 008 A2

Bundesdruckerei Berlin

**Beschreibung**

Verfahren zum Herstellen von Reliefbildern

Die Erfindung betrifft ein Verfahren zum Herstellen von Reliefbildern, insbesondere von Postkarten, Glückwunschkarten od. dgl., bei dem man in das Substrat ein Relief einprägt, indem man einen erhitzten Prägestempel gegen das Substrat drückt.

Es ist bekannt Postkarten, insbesondere Glückwunschpostkarten oder Glückwunschbillets, mit Prägungen zu versehen. Da die bekannten geprägten Postkarten od. dgl. aus Papier oder Karton bestehen, können einerseits, und dies mit größerem Aufwand, nur schwache Prägungen herbeigeführt werden.

In der GB-PS 598 440 wird vorgeschlagen, einen dekorativen Gegenstand, der beispielsweise ein Umleimer ist, herzustellen, indem mit Hilfe einer Prägewalze in einen auf eine Stützlage, die beispielsweise Papier oder Kunststoff sein kann, aufextrudierten Kunststoffstrang ein Relief eingeprägt wird. In der GB-PS 598 440 ist auch die Möglichkeit erwähnt, bildliche und/oder graphische Darstellungen anzubringen, wobei diese auf der Oberseite der Stützbahn oder auch auf der Unterseite einer Decklage, die vor dem Prägen auf den Kunststoffstrang aufgebracht wird, angeordnet sein können. Irgendwelche Angaben darüber, daß die Prägewalze beheizt ist, oder Angaben, mit welchem Druck die Prägewalze angepreßt wird, sind der GB-PS 598 440 nicht zu entnehmen.

In der DE-OS 2 555 215, aus der ein Verfahren der eingangs genannten Gattung bekannt ist, wird vorgeschlagen, mit Hilfe eines beheizten Prägestempels ein Substrat (z.B. eine Banknote) zu prägen, und gleichzeitig eine Decklage, die aus einer thermoplastischen Schicht besteht, aufzudrücken. Das Anbringen irgendwelcher Drucke auf dem Substrat ist nicht erwähnt.

Der Erfindung liegt die Aufgabe zugrunde, ein Verfahren der eingangs genannten Gattung anzugeben, mit dem auch im Bereich bildlicher Darstellungen geprägte Reliefbilder auf einfache Art und Weise und dauerhaft hergestellt werden können.

Erfindungsgemäß wird dies dadurch erreicht, daß man als Substrat eine Schaumstoffplatte aus thermoplastischem Kunststoff verwendet, daß man auf das Substrat wenigstens einseitig, vorzugsweise im Siebdruckverfahren bildliche und/oder grafische Darstellungen aufbringt, daß man einen auf eine Temperatur zwischen 100 und 130°C, vorzugsweise 110 bis 120°C, erhitzten Prägestempel mit einer Preßkraft von wenigstens 0,5 kg/cm² gegen das Substrat drückt, wobei man das Substrat auf der dem zu erzeugenden Relief gegenüberliegenden Seite, wie an sich bekannt, flächig abstützt und daß man ggf. die Reliefdarstellung aus einem größeren Teil des Substrates heraustrennt.

Dadurch, daß man als Substrat eine Schaumstoffplatte aus thermoplastischem Kunststoff verwendet, gelingt es mit dem erfindungsgemäßen Verfahren mit überraschend geringem Aufwand stark strukturierte Reliefbilder herzustellen, wobei die Höhe der Erhebungen im Relief gegenüber den Vertiefungen in demselben nahezu die gesamte Stärke der Schaumstoffplatte ausmachen kann. Vorteilhaft ist weiters, daß die Rückseite des Reliefbildes, anders als bei den bekannten geprägten Papier- oder Kartonbildern, eben bleibt. Im Rahmen der Erfindung ist jede Schaumstoffplatte aus thermoplastischem Kunststoff verwendbar, wobei bevorzugt Schaumstoffplatten aus Polystyrolschaum (sogenannte Polystyrolschaumfolien, die im Extrudierverfahren hergestellt worden sind) verwendet werden.

Von besonderer Bedeutung beim erfindungsgemäßen Verfahren sind die weiter oben genannten Temperaturbereiche und die Preßkraft, mit welcher der Prägestempel gegen das Substrat gedrückt wird. Die Preßkraft sollte in jedem Fall über 0,5 kg/cm² liegen, wobei man für gewöhnlich mit einer Preßkraft, die zwischen 1,2 und 2,0 kg/cm² liegen wird, arbeiten sollte.

In jedem Fall ist die Preßkraft so zu wählen, daß das gewünschte Relief erhalten wird, ohne daß das Substrat durch eine zu groß gewählte Kraft, mit welcher der Prägestempel angedrückt wird, zur Gänze durchgedrückt wird.

Mit dem erfindungsgemäßen Verfahren lassen sich Postkarten in einem Arbeitsgang herstellen; es ist jedoch auch möglich, das gewünschte Relief in einem größeren Zuschnitt des Substrates herzustellen und dieses dann auf die gewünschte Größe zuzuschneiden. Hiezu kann im Rahmen der Erfindung so vorgegangen werden, daß man zum Heraustrennen der gewünschten Darstellung ein Stanzmesser verwendet, das die gleiche Temperatur besitzt, wie das Preßwerkzeug beim Prägevorgang. Diese Vorgangsweise ergibt den Vorteil, daß das Bild abgerundete Schnittkanten aufweist.

Im Rahmen der Erfindung wird man für gewöhnlich als Substrat eine Schaumstoffplatte mit einer Dicke von 1 bis 3, vorzugsweise 1,5 bis 2 mm verwenden.

Falls eine erhöhte Stabilität des erfindungsgemäß herstellbaren Reliefbildes gewünscht wird, kann man, wie im Rahmen der Erfindung vorgeschlagen, die der geprägten Seite gegenüberliegende ebene Seite des Substrates mit Papier, vorzugsweise mit Papier mit einem Flächengewicht von wenigstens 30 bis 40 g/m², kaschieren. Dies ist bei der Herstellung von Karten oder Bildern von Bedeutung, die auf ihrer Rückseite beschriftet werden sollen.

Die Zeit, mit der man den Prägestempel gegen das Substrat drückt, wird von verschiedenen Parametern, wie der Dicke des Substrates und der Tiefe, mit der das gewünschte Relief eingeprägt werden soll, abhängen. In der Regel genügt es beim erfindungsgemäßen Verfahren, wenn man den Prägestempel etwa 5 bis 10 Sekunden gegen das Substrat drückt.

Mit dem erfindungsgemäßen Verfahren ist es auch möglich, Kombinationen flächiger und strukturierter Bilder herzustellen. Dabei kann man erfindungsgemäß so vorgehen, daß man beim Prägevorgang im Substrat eine Vertiefung mit ebener Fläche erzeugt, in die man nach dem Prägevorgang ein Stück eines flächigen Werkstoffes, wie Papier, Druckpapier od. dgl. aufbringt, das vorzugsweise grafische und/oder bildliche Darstellungen trägt. Dieses Stück flächiger Werkstoff, z.B. ein Stück Druckpapier, bildet dann im fertigen Bild eine ebene Fläche, die ihrerseits mit Drucken oder sonstigen bildlichen Darstellungen versehen sein kann. Es ist aber auch möglich, das Stück des flächigen Werkstoffes, das auf der Schaumstoffplatte angebracht worden ist (rein thermischer Verbund oder Verwendung von Klebstoffen) schon vorher mit bildlichen und/oder grafischen Darstellungen zu versehen. Hierin liegt ein besonderer Vorteil des erfindungsgemäßen Verfahrens, da es möglich ist, in einem Druckverfahren, z.B. dem Siebdruckverfahren, bildliche und/oder grafische Darstellungen im mit den Reliefen versehenen Bereich aufzubringen, der dann nach dem Prägen den oder die ebenen Bereiche des Reliefbildes umgibt.

Um den am erfindungsgemäß hergestellten Reliefbild vorgesehenen Druck zu schützen, kann man die Oberfläche des Substrates nach dem Bedrucken und vor der Ausführung des Prägevorganges mit einem Klarlack überziehen. Dieses Überziehen mit Klarlack erfolgt somit vor dem Prägevorgang, so daß sich keine Probleme beim Aufbringen des Klarlacks ergeben.

Das erfindungsgemäße Verfahren läßt sich mit Hilfe einer einfachen Presse, von der wenigstens ein Stempel beheizbar ist, ausführen. Um eine gute Abstützung des Substra tes während des Präge(Preß)vorganges zu gewährleisten, ist der untere Stempel der Presse bevorzugt so glatt wie möglich ausgeführt. Der für gewöhnlich von oben wirkende Prägestempel kann mit dem gewünschten Relief auf chemische oder mechanische Art und Weise versehen worden sein und sollte ebenfalls möglichst glatt sein. Für die Herstellung von Reliefbildern mit dem Format DIN A6 wird der Prägestempel mit einer Temperatur zwischen 107 und 120°C 5 bis 10 sec lang mit einer Kraft von 200 kg gegen das Substrat gedrückt.

Nachstehend wird ein nicht beschränkendes Ausführungsbeispiel für die Erfindung angegeben.

Als Substrat wird im Ausführungsbeispiel eine Polystyrolschaumfolie mit einer Dicke von 3 mm, einer Dichte von 120 kg/m$^3$ und einem Gewicht von 190 g/m$^2$ verwendet. Es wird ein Reliefbild mit einer Abmessung von 10,5 × 15 cm hergestellt.

Hiezu wird die Folie zunächst auf ihrer Rückseite (die nicht mit Relief zu versehende Seite des Substrates) mit einem Papier (60 g/m$^2$) kaschiert.

Die so kaschierte Schaumpolystyrolfolie wird in eine Presse eingelegt, deren unterer Stempel vollkommen eben und glatt ist. Der obere bewegliche Stempel der Presse, der Prägestempel, ist mit dem Negativ des herzustellenden Reliefs versehen und ist auf eine Temperatur von 112°C ± 3°C erwärmt. Zur Herstellung des Reliefs wird der Prägestempel mit einer Kraft von 189 kg (1,2 kg/cm$^2$) 5 sec lang gegen das Substrat gedrückt. Nach dem Abheben des Prägestempels wird aus dem Substrat das Bild, z.B. die Postkarte, mit Hilfe von auf eine Temperatur von 112°C erhitzten Durchfallstanzwerkzeugen ausgestanzt.

Bevor mit dem Prägen des Reliefs begonnen wurde, wurden unter der Anwendung der Siebdrucktechnik unter Verwendung von Druckfarben "Jet Satin" (Hersteller Sericol) ein Bild aufgedruckt.

Vor dem Stanz- und Prägevorgang wurde die mit dem Relief zu versehende Oberseite der Schaumpolystyrolfolie mit einem Klarlack beschichtet, um den Druck zu schützen und das Reliefbild glänzend zu machen.

Bei den oben angegebenen Verfahrensparametern wurden in der Schaumpolystyrolfolie bis zu 2 mm tiefe Prägungen (Gesamtdicke der Schaumpolystyrolfolie 3 mm) erhalten.

## Patentansprüche

1. Verfahren zum Herstellen von Reliefbildern, insbesondere von Postkarten, Glückwunschkarten od. dgl., bei dem man in das Substrat ein Relief einprägt, indem man einen erhitzten Prägestempel gegen das Substrat drückt, dadurch gekennzeichnet, daß man als Substrat eine Schaumstoffplatte aus thermoplastischem Kunststoff verwendet, daß man auf das Substrat wenigstens einseitig, vorzugsweise im Siebdruckverfahren bildliche und/oder grafische Darstellungen aufbringt, daß man einen auf eine Temperatur zwischen 100 und 130°C, vorzugsweise 110 bis 120°C, erhitzten Prägestempel mit einer Preßkraft von wenigstens 0,5 kg/cm$^2$ gegen das Substrat drückt, wobei man das Substrat auf der dem zu erzeugenden Relief gegenüberliegenden Seite, wie an sich bekannt, flächig abstützt und daß man gegebenenfalls die Reliefdarstellung aus einem größeren Teil des Substrates heraustrennt.

2. Verfahren nach Anspruch 1, dadurch gekennzeichnet, daß man zum Heraustrennen der gewünschten Darstellung ein Stanzmesser verwendet, das die gleiche Temperatur wie der Prägestempel beim Prägevorgang besitzt.

3. Verfahren nach Anspruch 1 oder 2, dadurch gekennzeichnet, daß man als Substrat eine Schaumstoffplatte mit einer Dicke von 1 bis 3, vorzugsweise 1,5 bis 2,0 mm, verwendet.

4. Verfahren nach einem der Ansprüche 1 bis 3, dadurch gekennzeichnet, daß man die der geprägten Seite gegenüberliegende Fläche des Substrates mit Papier, vorzugsweise mit Papier mit einem Flächengewicht von wenigstens 30 bis 40 g/m$^2$, kaschiert.

5. Verfahren nach einem der Ansprüche 1 bis 4, dadurch gekennzeichnet, daß man den erhitzten Prägestempel etwa 5 bis 10 Sekunden gegen das Substrat drückt.

6. Verfahren nach einem der Ansprüche 1 bis 5, dadurch gekennzeichnet, daß man beim Prägevorgang im Substrat eine Vertiefung mit ebener Fläche erzeugt, in die man nach dem Prägevorgang ein Stück eines flächigen Werkstoffes, wie Papier, Druckpapier od. dgl., aufbringt, das vorzugsweise grafische und/oder bildliche Darstellungen trägt.

7. Verfahren nach einem der Ansprüche I bis 6, dadurch gekennzeichnet, daß man die Oberfläche des Substrates nach dem Bedrucken und vor der Ausführung des Prägevorganges mit einem Klarlack überzieht.